# FASCICULE DE BREVET EUROPEEN

(11) **EP 3 052 696 B1**
(45) Date de publication et mention de la délivrance du brevet: **05.02.2020**
(21) Numéro de dépôt: 14796211.2
(22) Date de dépôt: 29.09.2014
(51) Int. Cl.: D06M 11/45, D06N 3/00, D06N 3/04, F21V 8/00, C09K 21/02

(54) **TISSU COMPRENANT UN REVETEMENT TRANSPARENT RESISTANT AU FEU**
WOVEN COMPRISING A FIRE-PROOF COATING
EINE FEUERFESTE BESCHICHTUNG UMFASSENDES GEWEBE

(30) Priorité: 30.09.2013 FR 1359422
(43) Date de publication de la demande: 10.08.2016
(73) Titulaire: Saint-Gobain Adfors, 73000 Chambéry (FR)
(72) Inventeur: HAMDANI-DEVARENNES, Siska, 93300 Aubervilliers (FR); BERT, Christophe, F-84510 Caumont Sur Durance (FR); ESPIARD, Philippe, F-60270 Gouvieux (FR)
(74) Mandataire: Saint-Gobain Recherche
(86) Numéro de dépôt international: PCT/FR2014/052452
(87) Numéro de publication internationale: WO 2015/044616

(56) Documents cités:
- EP-A1- 2 557 141
- WO-A1-2013/088094
- FR-A1- 2 923 842
- US-A1- 2004 202 850
- FEDERICO CAROSIO ET AL: "Layer-by-layer assembly of silica-based flame retardant thin film on PET fabric", POLYMER DEGRADATION AND STABILITY, vol. 96, no. 5, 1 mai 2011 (2011-05-01), pages 745-750, XP055118823, ISSN: 0141-3910, DOI: 10.1016/j.polymdegradstab.2011.02.019
- Harald F. Krug ET AL: "Nanopartikel", RÖMPP Online, Version 3.37, 1 juin 2011 (2011-06-01), pages 1-5, XP055092623, Extrait de l'Internet: URL:http://www.roempp.com/prod3/ [extrait le 2013-12-10]
- JIANPING ZHANG ET AL: "Experimental and numerical study of burning behaviors of flaxboard with intumescent coating and nanoparticles in the cone calorimeter and single burning item tests", FIRE AND MATERIALS, vol. 36, no. 7, 15 août 2011 (2011-08-15), pages 554-564, XP055118838, ISSN: 0308-0501, DOI: 10.1002/fam.1114

## Description

L'invention concerne un textile tel qu'un tissu, de préférence lumineux, comprenant un support textile et un revêtement ignifugeant. L'invention concerne également un procédé de fabrication d'un textile présentant une résistance au feu améliorée par dépôt d'une composition aqueuse ignifugeante.

L'objectif de l'invention est de réaliser un textile destiné à des applications pour le bâtiment, notamment un tissu lumineux, présentant une excellente résistance au feu.

Un textile comprend un support textile, c'est-à-dire une feuille constituée de fils orientés dans une direction particulière ou au hasard. Les supports textiles peuvent être tissés ou non-tissés.

Un support textile non-tissé correspond à une feuille constituée de fils qui n'ont pas été tissés ou tricotés et dont la cohésion interne est assurée de différentes façons telle que par des moyens mécaniques, physiques et/ou chimiques.

Un support textile tissé correspond à une feuille constituée de fils répartis directionnellement obtenue par tissage ou tricotage. Le tissage est le résultat de l'entrecroisement, dans un même plan, de fils disposés dans le sens de la chaîne (appelés ci-après fils de chaîne) et de fils disposés perpendiculairement aux fils de chaîne, dans le sens de la trame (appelés ci-après fils de trame). Le liage obtenu entre ces fils de chaîne et ces fils de trame est appelé armure.

Les fils utilisés pour fabriquer des supports textiles tissés ou non-tissés, lumineux ou non-lumineux, peuvent être de nature organique ou minérale.

Les textiles destinés à des applications pour le bâtiment comprennent avantageusement des supports textiles comprenant des fils de nature minérale tels que des fils de verre et un revêtement additionnel au moins en partie organique.

Les tissus lumineux comprennent des supports textiles tissés obtenus par tissage de fils de liage et de fibres optiques. Les fibres optiques sont très souvent de nature organique.

Par conséquent, ces textiles, lumineux ou non, comprennent une proportion non négligeable de produit de nature organique provenant des fils du support textile et/ou d'un éventuel revêtement additionnel. Ces matériaux de nature organique ne présentent pas intrinsèquement de bonnes propriétés de résistance au feu.

Pour améliorer la résistance au feu de textiles, notamment de tissus lumineux, il a été proposé d'utiliser des revêtements ignifugeants. Un revêtement ignifugeant est un revêtement qui confère des propriétés retardatrices de flamme, c'est-à-dire un revêtement qui permet d'inhiber ou de retarder l'inflammation du support sous-jacent lorsque celui-ci est soumis à une chaleur excessive, de réduire la génération de fumées et/ou de retarder la propagation d'une flamme.

La complexité des tissus lumineux rend difficile l'amélioration des propriétés de résistance au feu sans nuire aux propriétés d'éclairement. Par exemple, l'augmentation de la densité de fibres optiques pour augmenter les niveaux d'éclairement, lorsque ces fibres sont de nature organique, n'est pas susceptible d'améliorer les propriétés au feu, voire se fait au détriment desdites propriétés.

De plus, les revêtements ignifugeants connus utilisés pour améliorer la résistance au feu de tissus sont pour la plupart opacifiants. La présence d'un tel revêtement opacifiant sur la surface utilisée comme surface éclairante d'un tissu lumineux diminue les niveaux d'éclairement pouvant être obtenus.

La demande WO 2013/088094 divulgue par exemple une nappe éclairante ignifugée par une composition ignifugeante imprégnée dans la masse de la nappe éclairante et/ou comprise dans un revêtement sur au moins une face de la nappe éclairante. La composition ignifugeante comprend par exemple un agent ignifugeant choisi parmi les composés phosphorés, les composés halogénés et les charges minérales.

Il existe donc un besoin de développer des textiles comprenant un revêtement ignifugeant transparent présentant une résistance au feu amélioré, notamment des tissus lumineux.

La Demanderesse a mis en évidence un textile comprenant un revêtement ignifugeant permettant d'obtenir les propriétés anti-feu recherchées ainsi que des propriétés esthétiques avantageuses tout en maintenant une bonne transparence grâce à l'utilisation combinée d'agents ignifugeants spécifiques et d'un polymère approprié.

L'invention concerne donc un textile comprenant un support textile, tissé ou non-tissé, et un revêtement ignifugeant caractérisé en ce que le revêtement ignifugeant comprend :
(i) des nanoparticules d'un agent ignifuge minéral choisi dans le groupe constitué de monohydroxyde d'aluminium (AlOOH), de trihydroxyde d'aluminium (Al(OH)₃) et d'un mélange de ceux-ci et
(ii) du poly(alcool vinylique) (PVOH).

Le textile selon l'invention a une structure dite tridimensionnelle en ce qu'il présente à plat une certaine épaisseur. Le textile selon l'invention comprend deux faces principales définissant deux surfaces opposées. Selon les applications envisagées, l'une ou les deux faces du textile sont destinées à être visible par un utilisateur. Un tissu lumineux comprend un revêtement ignifugeant, de préférence sur une face destinée à être visible par un utilisateur.

Selon un mode de réalisation avantageux, le revêtement ignifugeant comprend une proportion importante de nanoparticules. Le revêtement ignifugeant peut notamment comprendre en masse, de la masse totale de (i) et (ii) :
(i) 50 à 90 % de nanoparticules de monohydroxyde d'aluminium et/ou de trihydroxyde d'aluminium,
(ii) 10 à 50 %de poly(alcool vinylique).

Selon un autre mode de réalisation avantageux, le textile comprend un support textile comprenant des fils de verre.

Selon un autre mode de réalisation avantageux, le textile est un tissu lumineux.

Le textile ainsi défini présente des performances améliorées en réaction au feu. Lorsque le textile est un tissu lumineux ces améliorations sont constatées sans nuire aux propriétés d'éclairement. Ces propriétés avantageuses résultent d'une synergie entre les nanoparticules et le poly(alcool vinylique).

En effet, le choix spécifique du poly(alcool vinylique) comme milieu liant et le choix de proportions importantes de nanoparticules dans le revêtement ignifugeant concourent à l'obtention des propriétés de transparence et de résistance au feu avantageuses.

De manière surprenante, l'excellente transparence du revêtement selon l'invention résulte d'une part du choix des constituants mais également de leur excellente compatibilité entre eux avant dépôt sous forme de composition aqueuse. En effet, les nanoparticules de monohydroxyde d'aluminium et/ou de trihydroxyde d'aluminium et le poly(alcool vinylique) sont tous deux hydrophiles et forment facilement des compositions aqueuses homogènes même lorsque les proportions de nanoparticules sont élevées par rapport aux proportions de poly(alcool vinylique). L'homogénéité au sein de la composition aqueuse est conservée après élimination de l'eau et formation du revêtement.

Les nanoparticules ne semblent pas s'agglomérer de façon préjudiciable. Le revêtement ignifuge ainsi obtenu présente une bonne transparence, et ce, même lorsque les proportions de matière minérale dues à la présence des nanoparticules sont importantes.

Du point de vue des propriétés de résistance au feu, le choix du poly(alcool vinylique), de nanoparticules de monohydroxyde d'aluminium et/ou de trihydroxyde d'aluminium ainsi que la présence importante desdites nanoparticules concourent à l'obtention de ces propriétés.

Le poly(alcool vinylique), dont la fonction première est de servir de milieu liant aux nanoparticules, semble de manière surprenante contribuer à l'obtention des propriétés de résistance au feu. Ce polymère génère lors de sa combustion des résidus de carbonisation. Ces résidus forment à la surface du textile une barrière qui semble gêner l'approvisionnement en oxygène, réduire la conductivité thermique et limiter les transferts thermiques. Cette barrière correspond à une couche protectrice résultant de la carbonisation des espèces organiques (dont PVOH) en présence de l'agent ignifuge minéral.

Les nanopaticules de monohydroxyde d'aluminium et/ou de trihydroxyde d'aluminium subissent une déshydratation endothermique lors de leur dégradation thermique. La libération d'eau refroidit le système et dilue les gaz dans la zone des flammes, provoquant ainsi un retard à l'inflammation. Mais également, une céramique protectrice est formée à l'issue de la dégradation en surface du matériau. Cette céramique joue le rôle de bouclier thermique.

Les proportions importantes de nanoparticules dans le revêtement permettent d'obtenir une couche non négligeable de céramique protectrice sur l'ensemble de la surface où préexistait le revêtement ignifugeant avant combustion. Cette couche de céramique est particulièrement avantageuse car elle permet même en cas de dégradation importante du support textile de maintenir une cohésion. La capacité du textile selon l'invention à ne pas générer de poussière une fois brulé et de conserver une certaine tenue est particulièrement avantageuse.

Du point de vue des propriétés esthétiques, le revêtement ignifugeant ne modifie pas, voire améliore l'esthétisme du textile notamment l'aspect et le toucher. Par exemple, en fonction des applications visées, la présence du revêtement permet de moduler la flexibilité ou la rigidité du textile. En effet, ce revêtement est suffisamment souple pour ne pas craquer lors de la manipulation du textile. De plus, il confère à la surface du textile revêtu un aspect lisse.

Enfin, à ces avantages, s'ajoute, lorsque le textile est un tissu lumineux, le maintien des niveaux d'éclairement pouvant être obtenus. On n'observe pas de perte de luminance significative mesurée à la normale par rapport à la surface émettrice due à la présence du revêtement ignifugeant. Le tissu lumineux selon l'invention présente des performances d'éclairage avantageuses par rapport à des tissus présentant des revêtements ignifugeants non transparents ou opacifiants placés sur leur face éclairante.

Le revêtement ignifugeant présente avantageusement un grammage, correspondant à la masse surfacique, de 25 à 500 g/m², de préférence de 50 à 350 g/m², de préférence de 100 à 350 g/m², en particulier de 150 à 250 g/m².

Les masses de revêtement par unité de surface correspondent à la masse des revêtements secs, c'est à dire après élimination des milieux solvants ou dispersant.

On entend par nanoparticule au sens de la présente invention une particule ayant un diamètre équivalent inférieur à 950 nm, le diamètre équivalent correspondant au diamètre de la sphère équivalente, c'est-à-dire de la sphère ayant le même comportement en analyse granulométrique par diffusion laser que la nanoparticule.

De préférence, l'agent ignifuge minéral comprend du monohydroxyde d'aluminium, en particulier sous forme de boehmite.

Les particules doivent être des nanoparticules, c'est-à-dire avoir un diamètre équivalent inférieur à 950 nm. Avantageusement au moins 95 %des nanoparticules d'agent ignifuge minéral ont un diamètre équivalent inférieur à 750 nm, voire inférieur à 500 nm, en particulier inférieur à 400 nm et idéalement inférieur à 300 nm. Le diamètre équivalent est avantageusement supérieur à 20 nm, voire supérieur à 50 nm, voire supérieur à 60 nm, en particulier supérieur à 80 nm. Le diamètre équivalent est déterminé par granulométrie laser (DLS, *dynamic light scattering*) sur un appareil PARTICA LA-950 commercialisé par la société Horiba, les poudres étant analysées dans l'eau sans utilisation d'ultra-sons.

De telles particules semblent contribuer à l'obtention d'un revêtement présentant une surface non rugueuse.

Bien que les nanoparticules puissent en principe avoir des formes variées, par exemple allongée ou aplatie, on utilisera de préférence des nanoparticules ayant un facteur de forme - défini comme le rapport L/I entre la plus grande dimension L et la plus grande dimension I dans un plan perpendiculaire à L - inférieur ou égal à 2, de préférence proche de 1.

Bien que l'utilisation de monohydroxyde d'aluminium et/ou de trihydroxyde d'aluminium comme seul agent ignifuge minéral constitue un mode de réalisation préféré de la présente invention, il est envisageable qu'une assez faible fraction du monohydroxyde d'aluminium et/ou du trihydroxyde d'aluminium soit remplacée par un autre agent ignifuge minéral choisi parmi les retardateurs de flamme à décomposition endothermique. On peut citer à titre d'exemples de tels autres agents ignifuges l'hydroxyde de magnésium (Mg(OH)₂ et l'hydroxycarbonate de magnésium (notamment l'hydromagnésite Mg₂(CO₃)₄(OH)₂.4H₂O). Cette fraction remplacée ne dépasse toutefois généralement pas 20 % en poids.

Le poly(alcool vinylique), préparé par hydrolyse du poly(acétate de vinyle), présente typiquement un taux d'hydrolyse d'au moins 60 %, de préférence d'au moins 72 %, de préférence d'au moins 85%, autrement dit au plus 40 %, de préférence au plus 28 %, de préférence au plus 15 %des motifs formant le polymère sont encore sous forme d'acétate.

Le revêtement ignifuge est de préférence essentiellement constituée d'agent ignifuge minéral et de PVOH ; autrement dit il ne contient de préférence pas d'autres ingrédients que du PVOH et du monohydroxyde d'aluminium, du trihydroxyde d'aluminium ou un mélange de ceux-ci.

Le rapport en poids agent ignifuge minéral / PVOH est de préférence compris entre 8/2 et 6/4, en particulier entre 7/3 et 5/5.

L'invention concerne également un procédé de fabrication d'un textile tel que défini ci-dessus comprenant un support textile et un revêtement ignifugeant, le procédé comprenant :
- le dépôt d'une composition aqueuse ignifugeante comprenant :
   (i) des nanoparticules d'un agent ignifuge minéral choisi dans le groupe constitué de monohydroxyde d'aluminium (AlOOH), de trihydroxyde d'aluminium (Al(OH)₃) et d'un mélange de ceux-ci et
   (ii) du poly(alcool vinylique),
- le séchage pour obtenir le revêtement ignifugeant.

L'invention concerne également l'utilisation d'un revêtement ignifugeant tel que décrit ci-dessus pour améliorer le comportement au feu d'un textile comprenant un support textile.

Le revêtement ignifuge est obtenu par dépôt d'une composition aqueuse ignifugeante. Cette composition aqueuse est une composition colloïdale. Elle comprend, dans un milieu aqueux, de préférence de l'eau déminéralisée, du poly(alcool vinylique) et des nanoparticules d'un agent ignifuge minéral choisi dans le groupe constitué de monohydroxyde d'aluminium, de trihydroxyde d'aluminium et d'un mélange de ceux-ci.

De préférence, la composition aqueuse ignifugeante comprend, en masse par rapport à la masse totale de matière solide dans la composition :(i) 50 à 90 % de nanoparticules de monohydroxyde d'aluminium et/ou de trihydroxyde d'aluminium, (ii) 10 à 50 %de poly(alcool vinylique).

Pour pouvoir obtenir les épaisseurs requises, la composition doit avoir une viscosité adaptée. Sa viscosité est avantageusement inférieure à 10 Pa.s, de préférence inférieure à 5 Pa.s, en particulier inférieure à 3 Pa.s.

Cette viscosité correspond à la viscosité Brookfield, déterminée à l'aide d'un rhéomètre à contrainte imposée (type AR-2000 de TA Intrument) utilisant une géométrie cône -plan sous une contrainte de 10 Pa à température ambiante (25°C).

Pour obtenir une telle viscosité, l'agent ignifuge minéral se présente avantageusement sous forme d'une solution colloïdale de boehmite.
La composition aqueuse a un caractère thixotrope prononcé. Lorsqu'on la laisse reposer pendant un temps prolongé, elle forme un gel physique par établissement de liaisons hydrogène entre les groupes hydroxyle du PVOH et les groupes hydroxyle à la surface de l'agent ignifuge. Avant chaque étape de dépôt, il est indispensable de soumettre la composition à une contrainte de cisaillement pour la fluidifier.

La composition aqueuse présente une teneur en matières solides comprise entre 10 et 30 %, de préférence entre 12 et 22 %

Lorsqu'on met le monohydroxyde et/ou trihydroxyde d'aluminium en suspension dans de l'eau déminéralisée, ils confèrent naturellement à la suspension colloïdale un pH faiblement acide. La composition aqueuse ignifugeante a typiquement un pH compris entre 2 et 6, de préférence entre 3 et 5.

La composition aqueuse ignifugeante contient avantageusement, en masse par rapport à la masse totale de la composition aqueuse ignifugeante, de 5 %à 40 %, de préférence de 6 %à 30 %, en particulier de 7 %à 20 %et idéalement de 8 %à 15 %de nanoparticules d'agent ignifuge minéral, de préférence de monohydroxyde d'aluminium et/ou de trihydroxyde d'aluminium, et de 2 %à 30 %, de préférence de 3 %à 20 %, en particulier de 4 %à 15 %et idéalement de 5 %à 10 %de poly(alcool vinylique).

On prépare de préférence la composition aqueuse en dissolvant au préalable le poly(alcool vinylique) dans de l'eau déminéralisée, sous agitation et chauffage. On ajoute ensuite à la solution de PVOH, la poudre d'agent ignifuge qui a été éventuellement mise en suspension préalablement dans de l'eau déminéralisée.

Le séchage peut se faire à température ambiante ou avec chauffage à une température, de préférence inférieure à 80 °C, à pression atmosphérique ou sub-atmosphérique. La durée de séchage dépend bien entendu des conditions de séchage et des dimensions du textile à sécher et est généralement comprise entre quelques secondes à plusieurs heures.

Les supports textiles peuvent être à base de fibres minérales, de fibres organiques ou composites c'est à dire comprendre un mélange de fibres organiques et minérales.

Les fibres minérales sont par exemple choisies parmi le groupe comprenant le verre, le quartz, la silice.

Les fibres organiques peuvent être de fibres naturelles ou de synthèse et sont par exemple choisies parmi les fibres de polyester, de polyamide, de polyméthacrylate de méthyle (PMMA), de polycarbonate (PC), de cyclo-oléfines (COP) et de polymères fluorés.

Les supports textiles pouvant être utilisés selon l'invention présentent une masse surfacique généralement comprise entre 30 et 2500 g/m².

Les supports textiles peuvent être tissé ou non-tissé. Ils comprennent :
- les grilles, de préférence ouvertes, correspondant à des supports textiles composés de fils continus liés chimiquement,
- les mats de préférence de verre, correspondant à des supports textiles non tissés composé de fibres de verre dispersées de façon uniforme et liées chimiquement,
- tous produits tissés fabriqués sur un métier à tisser ou tricotés avec des fils de chaîne et de trame selon différentes armures qui forment un support textile.

A titre d'exemples de produits tissés, on peut citer les grilles pour les applications isolation thermique extérieur ainsi que les grilles de renfort des éléments du bâtiment tels que les revêtements de façade.

Les support s textiles non-tissés présentent avantageusement :
- une masse surfacique comprise entre 30 à 500 g/m², 50 à 300 g/m², 100 à 1500 g/m² et/ou
- une taille d'ouverture de maille comprise entre 1 mm² et 15 cm².

Les support s textiles tissés présentent avantageusement :
- une masse surfacique comprise entre 100 à 2500 g/m², 250 à 1000 g/m², et/ou
- une épaisseur inférieure à 10 mm, de préférence comprise entre 0,25 µm et 5 mm.

Selon un mode de réalisation avantageux, le textile comprend un support textile, tissé ou non tissé, comprenant des fils de verre.

Le support textile peut comprendre uniquement des fils de verre.

Le support textile peut également comprendre une combinaison de fils de verre et de fil de nature organique et constituer dans ce cas un tissu dit hybride. Un tissu lumineux à base de fils de verre et de fibres optiques de nature organique constitue un exemple de tels tissus hybrides.

Avantageusement, le support textile comprend en masse par rapport à la masse du support textile au moins 20%, au moins 30%, au moins 40%, au moins 50 %, au moins 60 %, au moins 70 %, au moins 80 %, au moins 90 %de composés de nature minérale tels que des fils de verre.

Les fils de verre convenant selon l'invention et leur procédé de fabrication sont décrits par exemple dans « Fibres de verre de renforcement », Techniques de l'Ingénieur, Traité Plastiques et Composites. Les fils de verre sont formés de filaments présentant un diamètre en général compris entre 5 et 24 µm, de préférence entre 6 et 16 µm, et mieux entre 8 et 13 µm. Les fils de verre sont élaborés à partir des matières premières traditionnelles nécessaires à la fabrication du verre telles que la silice, la chaux, l'alumine et la magnésie. Les fils de verres convenant selon l'invention incluent notamment les fils de verre E et les fils de silice.

Les fils de verre sont définis par leur titre TEX ou masse linéique qui est fonction du diamètre et du nombre de filament de base constituant le fil. Le TEX correspond à la masse en grammes de 1000 m de fil. Les fils de verre ont de préférence un titre compris entre 10 et 30000 TEX, de préférence un titre supérieur ou égal à 30 TEX, de préférence compris de 34 à 29 000 TEX.

Les fils de verre peuvent être des fils de verre torsadés présentant au moins 5, au moins 10, au moins 15 ou au moins 20 torsions/m.

Les fils de verre sont de préférence préalablement ensimés au moment de leur formation et peuvent être ensuite encollés. L'ensimage est un produit de traitement que l'on applique à la surface des fibres de verre après leur sortie de la filière de formage des fibres de verre. Tous les fils de verre sont en général ensimés. L'encollage contrairement à l'ensimage est un traitement réalisé «en reprise» c'est-à-dire après fabrication de fils de verre.

L'ensimage consiste à appliquer une composition d'ensimage comprenant au moins un agent d'ensimage. Pour les agents d'ensimage, on peut se référer aux agents d'ensimage décrits dans « Fibres de verre de renforcement », Technique de l'Ingénieur, traités Plastiques et Composites.

L'encollage consiste à appliquer une composition d'encollage comprenant au moins un agent d'encollage. Les mêmes compositions peuvent être utilisées pour l'ensimage ou l'encollage. Au terme de l'étape d'encollage, chaque fil de verre, de préférence utilisé en chaine, est revêtu d'une gaine, qui recouvre l'ensemble de sa périphérie. Pour l'encollage, on peut se référer à la demande WO 2009/071812.

Le revêtement ignifuge ne doit pas être confondu avec un ensimage ou un encollage. Le revêtement est déposé sur un support textile déjà formé.

Le revêtement ignifugeant représente en masse par rapport à la masse du revêtement ignifugeant et du support textile tissé au moins 5 %, de préférence au moins 8 % ou au moins 10 %. Les proportions d'ensimage et/ou d'encollage sont beaucoup plus faibles en général inférieures à 1%en masse de la masse des fibres pour l'ensimage et inférieures à 5%en masse de la masse des fibres pour l'encollage.

Avantageusement, les fils de verre représentent en masse par rapport à la masse du support textile, tissé ou non tissé, au moins 20%, au moins 30%, au moins 40%, au moins 50 %, au moins 60 %, au moins 70 %, au moins 80 %ou au moins 90 % Plus les proportions de fils de verre dans le support textile tissé sont élevées meilleures sont les performances au feu.

Selon un mode de réalisation avantageux, le textile est un tissu lumineux comprenant deux faces dont l'une au moins est utilisée comme surface éclairante. Le tissu lumineux comprend un revêtement ignifugeant, de préférence est appliqué du côté de la face utilisée comme surface éclairante. Selon une variante, le support textile tissé comprend une seule face utilisée comme surface éclairante, ci-après surface ou face éclairante principale. Selon une autre variante, le support textile tissé comprend deux faces utilisées comme surfaces éclairantes.

Le textile comprend alors un support textile tissé comprenant des fils de chaine et des fils de trame choisis parmi des fils de liage et des fibres optiques aptes à émettre latéralement de la lumière.

Les fils de liages permettent d'assurer la bonne cohésion de l'ensemble du support textile tissé. Le terme « fil de liage », au sens de l'invention, comprend tous fils ou fibres autres que des fibres optiques, c'est-à-dire tous fils ou fibres ne présentant pas la propriété de pouvoir émettre latéralement de la lumière et donc non directement connectés ou connectables à une source lumineuse.

Les fils de liage comprennent avantageusement des fils de verre.
De préférence, les fils de verre formant le support textile tissé sont présents en quantité importante en masse et en nombre. Selon ce mode de réalisation, les fils de liage sont majoritairement des fils de verre en masse et en nombre.

Les fils de verre utilisés comme fils de liage peuvent représenter en masse par rapport à la masse totale des fils de liage constituant le support textile tissé, par ordre de préférence croissant, au moins 50%, au moins 60%, au moins 70%, au moins 80%, au moins 90%, au moins 95%, au moins 99%

Les fils de verre représentent au moins 30%, de préférence au moins 40 %, et mieux au moins 50%, en masse de la masse du support textile tissé. La masse du support textile tissé correspond à la masse totale des fils de trame et des fils de chaine, c'est-à-dire à la masse de l'ensemble des fils de liage et des fibres optiques.

Selon un autre mode de réalisation, les fils de liage constituant le support textile tissé peuvent comprendre des fils ou fibres autres que des fils de verre. Les fils de liages peuvent notamment comprendre une combinaison de fils de verre et de fils de nature différente tels que des fils à base de fibres organiques, métalliques ou minérales autres que des fibres de verre.

Selon un autre mode de réalisations, tous les fils de liages sont des fils de verre, c'est-à-dire que tous les fils autres que des fibres optiques sont des fils de verre.

Les fibres optiques sont aptes, une fois connectées à une source lumineuse, à émettre latéralement de la lumière grâce à la présence d'altérations invasives le long de leur surface. Les fibres optiques peuvent être formées d'un matériau minéral ou organique et être mono ou bi-composants.

Les matériaux minéraux sont par exemple choisis parmi le groupe comprenant le verre, le quartz, la silice. Les matériaux organiques sont par exemple choisis parmi le groupe comprenant le polyméthacrylate de méthyle (PMMA), le polycarbonate (PC), lescyclo-oléfines (COP) et les polymères fluorés.

Une gaine peut venir recouvrir les fibres optiques pour les protéger. Dans ce cas, les fibres optiques sont réalisées en deux matériaux et présentent une âme recouverte d'une gaine qui peut être de différente nature. Ces structures sont également appelées structure cœur-écorce.

A titre de fibres optiques bicomposants convenant tout particulièrement, on peut citer les fibres comprenant un cœur en polyméthacrylate de méthyle (PMMA) et une gaine à base d'un polymère fluoré tel que le polytétrafluoroéthylène (PTFE).

Parmi les fibres optiques convenant tout particulièrement, on peut citer les fibres optiques monocomposants à base de silice ou bi-composants comprenant un cœur en silice et une gaine polymère.

L'utilisation de ce type de fibres optiques de nature partiellement ou totalement minérale permet d'augmenter encore davantage la proportion de matériaux minéraux dans le support textile tissé et en particulier de lui conférer des propriétés de résistance au feu ou de recyclabilté inégalables.

Les fibres optiques, mono ou bi-composants, présentent avantageusement un diamètre compris entre 100 et 1000 µm, de préférence de 200 à 550 µm, de préférence de 450 à 550 µm.

Les fibres optiques comprennent des altérations invasives, correspondant à des encoches ou des petites fentes, qui permettent l'extraction de la lumière au niveau des fibres car elles modifient l'angle de réflexion des rayons lumineux à l'intérieur de la fibre et la transmission latérale de la lumière à l'extérieur de la fibre. Les fibres optiques permettent donc à la fois de véhiculer la lumière à l'intérieur de leur structure mais également d'émettre latéralement de la lumière. Par conséquent, les fibres optiques permettent de guider de façon répartie la lumière à l'intérieur du tissu lumineux et d'illuminer de manière diffuse les surfaces principales du tissu lumineux.

Les altérations invasives peuvent être obtenues de diverses manières et notamment par des procédés d'abrasion tels que le sablage, d'attaque chimique ou de fusion au moyen d'un rayonnement lumineux de forte intensité tel qu'un laser.

De préférence, les fibres optiques s'étendent en dehors de la surface définie par le tissu correspondant à la bordure du tissu lumineux. Les fibres optiques peuvent être tressées ou regroupées sous la forme de faisceaux de manière à faire coopérer une pluralité d'extrémités libres en regard d'une même source lumineuse, de préférence, en bordure du tissu lumineux. Concernant la fabrication du tissu lumineux et la connexion des fibres optiques, on peut se référer au brevet FR 2859737.

Les fibres optiques comprennent donc des extrémités libres aptes à être connectées ou agencées en regard d'une source lumineuse pour transmettre la lumière et émettre latéralement la lumière au niveau des altérations.

Le tissu lumineux comprend au moins une source lumineuse connectée à au moins une fibre optique.

Les sources lumineuses destinées à éclairer les extrémités libres des fibres optiques peuvent être de différentes natures, et notamment se présenter sous la forme de diodes électroluminescentes ou de sources étendues telles que des lampes à incandescence, de tubes fluorescents ou de tubes à décharge incorporant un gaz tel que du néon. Les sources lumineuses sont avantageusement des diodes électroluminescentes.

Le textile peut comprendre au moins un revêtement additionnel ayant pour objectif de conférer des fonctionnalités supplémentaires telles que des propriétés mécaniques, réfléchissantes, diffusantes, décoratives, de résistance au feu, au choc, à l'abrasion, anti-salissures, de lessivabilité, antistatiques ou autres. Le revêtement additionnel peut donc être choisi parmi les revêtements réfléchissants, les revêtements structurants, les revêtements présentant une bonne aptitude au nettoyage et les revêtements diffusants.

Le textile peut notamment comprendre un revêtement structurant, de préférence sur une face non utilisée comme surface éclairante lorsque le textile est un tissu lumineux. Ce revêtement additionnel structurant est avantageusement de couleur blanche et/ou réfléchissant et/ou majoritairement à base de matériau de nature minérale. La combinaison au sein d'un même tissu lumineux du support textile lumineux et du revêtement structurant concourt encore davantage à l'obtention d'excellente performance d'éclairage tout en permettant d'obtenir une bonne tenue mécanique.

Le tissu peut donc comprend un revêtement additionnel structurant sur une face non utilisée comme surface éclairante et un revêtement ignifugeant sur une face utilisée comme surface éclairante.

Le revêtement additionnel structurant présente avantageusement un grammage, correspondant à la masse surfacique, de 50 à 500 g/m², de préférence de 90 à 170 g/m².

Un domaine d'application important du textile selon l'invention se situe dans le domaine du bâtiment, en particulier dans le domaine de l'habitat. Le tissu lumineux de l'invention peut être utilisé notamment comme panneaux éclairants, comme cloison murale ou comme plafond dans un bâtiment.

Les tissus peuvent être fixés directement ou indirectement sur un support rigide ou semi-rigide par tout moyen connu et notamment à l'aide d'une colle.

Les tissus lumineux permettent de réaliser de la lumière sur une partie ou sur toute leur surface. Ils conviennent plus particulièrement pour l'illumination ou l'éclairage d'intérieur d'habitat sur murs, cloisons, plafonds, ou sols en tant que produit design ou de décoration.

### Exemples

### A. Matières premières

### I. Tissus sans revêtement

### 1. Tissus « non lumineux »

Tissu TP : Tissu à base de fibres de polyester non tissé, non lumineux.
Tissu TV : Tissu à base de fibres de verre non tissé, non lumineux.

### 2. Tissus « lumineux »

### Tissu LV : Tissu lumineux comprenant des fils de verre

Les tableaux ci-dessus regroupent les caractéristiques des fils de verre et des fibres optiques utilisés. Des fils de verre de type E ont été utilisés comme fils de chaine et comme fils de trame.

Les fils de liage utilisés en chaines sont des fils de verre encollés présentant une densité de 7,9 fils/cm. Les fils de liage utilisés en chaines sont tous des fils de verre. Les fils de trame comprennent des fibres optiques et de fils de verre. La densité de fibres optiques utilisées comme fils de trame est de 12 fils/cm. La densité de fils de verre utilisés comme fils de trame est de 12 fils/cm.

| **Fils de liage** | **Sens** | **Tex** | **Torsions** | **Dénomination** | **g/m2** |
|---|---|---|---|---|---|
| Fil de verre encollé | Chaine | 68 | 20 Nbr/ m | EC9 68 Z20 | 53,72 |
| Fil de verre | Trame | 136 | 28 Nbr/ m | EC11 136 Z28 | 163,2 |

| **Fibres optiques** | **Nature Cœur / Ecorce** | **Diamètre** | **TEX** | **g/m2** |
|---|---|---|---|---|
| FO2 | PMMA/ polymère fluoré (PTFE) | 500 µm | 240 | 240 |

Le support textile tissé obtenu présente un grammage de 524 g/m² et une proportion en masse de composés de nature minérale par rapport à la masse du support textile tissé de 43 %

Les supports textiles tissés ont ensuite subi une étape de traitement pour créer sur les fibres optiques des altérations invasives. L'étape de traitement a été réalisée par sablage ou par abrasion laser. Puis, une étape de connexion des fibres optiques a été réalisée. Cette étape consiste à regrouper en faisceau un certain nombre de fibres optiques en fonction de leur diamètre et à joindre les extrémités des fibres optiques à un système comprenant une source lumineuse. Les sources lumineuses utilisées sont des diodes électroluminescentes (LED OSRAM Dragon plus® LUW W5AM).

### II. Composition aqueuse ignifugeante

On prépare une solution aqueuse de PVOH en dissolvant, à une température de 80 °C et sous agitation, du PVOH (SELVOL commercialisé par la société SEKUISI) dans de l'eau déminéralisée. Le poly(alcool vinylique) utilisé présente une masse moléculaire de 87 000 g/mol, un taux d'hydrolyse de 87 à 89 % en moles et une masse volumique de 1,27 à 1,31 g/cm³.

On mélange ensuite à température ambiante 60 parties de cette solution contenant 12 % en poids de PVOH avec 40 parties d'une suspension colloïdale contenant 33 %en poids de boehmite nanométrique dans de l'eau déminéralisée. Les particules de boehmite présentent un facteur de forme de l'ordre de 1. Elles ont essentiellement toutes un diamètre équivalent inférieur à 500 nm, avec une proportion importante de particules ayant un diamètre équivalent inférieure à 200 nm.

La composition aqueuse ainsi obtenue contient 7,2 % en poids de PVOH, 13,35 % en poids de boehmite nanométrique et 79,45 % d'eau. Son pH est naturellement compris entre 3 et 5 sans qu'il soit nécessaire d'ajouter de l'acide.

### III. Composition de revêtement additionnel structurant

Une composition de revêtement structurant a été testée fournissant un revêtement comprenant en masse de la masse totale du revêtement sec :
- 78 % d'un liant de type acrylique choisi parmi les liants styrène-acrylique,
- 20 %de carbonate de calcium à titre de charge et
- 2 %de pigment blanc de type TiO₂.

La composition comprend comme solvant de l'eau. L'extrait sec dans la composition est de 75 %en masse.

La composition est appliquée sur une seule surface des différents tissus lumineux par enduction au couteau. Le séchage a été réalisé à température ambiante.

### A. Procédé d'obtention d'un tissu selon l'invention

Les tissus suivants ont été testés :
- Tissu TP : tissu comprenant des fils de liage en polyester (100%),
- Tissu TV : tissu comprenant des fils de liage en verre (100%),
- Tissu LV : tissu lumineux sans revêtement additionnel structurant,
- Tissu LVS: tissu lumineux comprenant un revêtement additionnel structurant déposées selon un grammage de 155 g/m².

### Tissu selon l'invention

La composition ignifugeante est vigoureusement agitée juste avant application pendant 5 minutes. Cette composition est ensuite appliquée sur une seule face des différents tissus par enduction au couteau. Le séchage est réalisé à température ambiante pendant 24 h.

Le tableau ci-dessous donne :
- le grammage (masse surfacique en g/m²) des tissus sans revêtement,
- le grammage des revêtements ignifugeants appliqués obtenus suite à l'application de la composition aqueuse ignifugeante et séchage.

| Ref. | Tissus | Grammage g/m² | |
|---|---|---|---|
| | | Support textile | Revêtement ignifugeant |
| 1 | Tissu PES | 100 | 87 |
| 2 | Tissu verre | 50 | 69,3 |
| 4 | Tissu LV1 | 524 | 43 |
| 5 | Tissu LV2 | 524 | 50,9 |
| 6 | Tissu LV3 | 524 | 92,1 |
| 7 | Tissu LV4 | 524 | 123,0 |
| 8 | Tissu LVS1 | 524 | 79 |
| 9 | Tissu LVS2 | 524 | 51 |

### B. Détermination des propriétés

### I. Evaluation de la résistance au feu

Des essais permettant d'évaluer l'allumabilité des produits de construction soumis à l'incidence directe d'une flamme et leur contribution à la propagation de la flamme selon la norme NF EN ISO 11925-2 ont été réalisés. L'échantillon est placé en position verticale dans la chambre de combustion et soumis à une flamme. Il est ensuite soumis à une flamme de hauteur calibrée à une distance prédéfinie dans la norme. Les tests sont réalisés sur 2 échantillons distincts. La flamme est appliquée soit en surface soit en tranche.

Des essais ont été réalisés pour chaque tissu comprenant un revêtement ignifugeant ainsi que pour des tissus témoins correspondant à tissus lumineux comprenant des fils de verre (Témoin-LV). Le tableau ci-dessous récapitule les résultats obtenus.

| **Réf.** | **Tps de propagation de la flamme à 150 mm** | | **Revêtement ignifugeant** |
|---|---|---|---|
| | **Bord** | **Surface** | |
| **PES** | - | - | 87 |
| **Témoin-LV** | 12 | 20 | 0 |
| **LV1** | 14 | 30 | 43 |
| **LV2** | 19 | 35 | 50,9 |
| **LV3** | 23 | 40 | 92,1 |
| **LV4** | 23 | 42 | 123,0 |
| **Témoin-LVS** | 22 | 29 | 0 |
| **LVS** | 22 | 45 | 51 |

Les tissus PES comprenant le revêtement ignifugeant selon l'invention conservent leur intégrité physique et notamment ne fondent pas lorsqu'ils sont exposés à une flamme contrairement à un tissu PES sans revêtement ignifugeant.

Dans tous les cas, le revêtement ignifugeant retarde la propagation de la flamme et donc ralentit une éventuelle dégradation des tissus.

### Détermination des propriétés esthétiques

Afin de montrer les qualités esthétiques des tissus, un panel de plusieurs personnes a apprécié qualitativement le toucher, l'aptitude à la manipulation et l'aspect visuel. Les indicateurs d'appréciation suivants ont été utilisés:
- concernant le toucher : «+» : doux, «-» : rugueux,
- concernant l'aptitude à la manipulation : «+» : absence de fissuration du revêtement ignifugeant, «-» : fissuration du revêtement ignifugeant,
- concernant aspect visuel : «-» moyen, «++» bon.

Le tableau ci-dessous récapitule les résultats obtenus pour différents tissus.

| Tissus | **Propriétés esthétiques** | | |
|---|---|---|---|
| | Toucher | Aptitude à la manipulation | Aspect visuel |
| Tissu PES | - | + | + |
| Tissu verre | - | + | + |
| Tissu LV1 | + | ++ | ++ |
| Tissu LV2 | + | ++ | ++ |
| Tissu LV3 | + | + | + |
| Tissu LV4 | + | + | + |
| Tissu LVS1 | + | ++ | ++ |

### II. Evaluation des propriétés d'éclairement dans le cas d'un tissu lumineux

Les performances lumineuses d'un tissu lumineux comprenant un revêtement structurant et un revêtement ignifugeant ont été mesurées (Tissu LVS) et comparées avec un tissu lumineux comprenant uniquement un revêtement structurant (Témoin - LVS). Le revêtement structurant est déposé sur la face non destinée à servir de surface éclairante principale (revêtement arrière) et le revêtement ignifugeant sur la face destinée à servir de surface éclairante principale.

Pour cela, la luminance a été mesurée selon la norme luminance ISO 23539:2005.

| Tissus | Luminance (Cd/ m2) |
|---|---|
| Témoin-LVS2 | 210 |
| LVS2 | 209 |

Les tissus comprenant le revêtement ignifugeant selon l'invention présentent à la fois d'excellentes propriétés d'éclairement, une tenue mécanique satisfaisante et une excellente résistance au feu. L'amélioration des propriétés de résistance au feu est obtenue sans nuire aux propriétés d'éclairement.

## Revendications

1. Textile comprenant un support textile, tissé ou non-tissé, et un revêtement ignifugeant **caractérisé en ce que** le revêtement ignifugeant comprend :
(i) des nanoparticules d'un agent ignifuge minéral qui ont un diamètre équivalent inférieur à 950 nm et sont choisi dans le groupe constitué de monohydroxyde d'aluminium (AlOOH), de trihydroxyde d'aluminium (Al(OH)₃) et d'un mélange de ceux-ci et
(ii) du poly(alcool vinylique).

2. Textile selon la revendication 1 **caractérisé en ce que** le revêtement ignifugeant comprend en masse de la masse totale de (i) et (ii) :
(i) 50 à 90 % de nanoparticules de monohydroxyde d'aluminium et/ou de trihydroxyde d'aluminium,
(ii) 10 à 50 %de poly(alcool vinylique).

3. Textile selon la revendication 1 ou 2, **caractérisé en ce que** le revêtement ignifugeant présente un grammage compris entre 25 et 500 g/m².

4. Textile selon l'une quelconque l'une quelconque des revendications précédentes, **caractérisé en ce qu'**au moins 95 %des nanoparticules d'agent ignifuge minéral ont un diamètre équivalent supérieur à 20 nm et inférieur à 750 nm.

5. Textile selon l'une quelconque l'une quelconque des revendications précédentes **caractérisé en ce que** le support textile comprend des fils de verre représentant au moins 30%en masse du support textile.

6. Textile selon l'une quelconque des revendications précédentes, **caractérisé en ce que** le textile est un tissu lumineux, le tissu comprenant deux faces dont l'une au moins est utilisée comme surface éclairante.

7. Textile selon la revendication 6 **caractérisé en ce que** le textile comprend un support textile tissé comprenant des fils de chaine et des fils de trame choisis parmi des fils de liage et des fibres optiques aptes à émettre latéralement de la lumière.

8. Textile selon la revendication 6 ou 7 **caractérisé par le fait que** les fils de liage comprennent des fils de verre représentant au moins 50 %en masse de la masse totale des fils de liage constituant le support textile tissé.

9. Textile selon l'une quelconque des revendications 6 à 9 **caractérisé en ce que** le revêtement ignifugeant est appliqué du côté de la face utilisée comme surface éclairante.

10. Textile selon l'une quelconque des revendications précédentes **caractérisé en ce qu'**il comprend au moins un revêtement additionnel choisi parmi les revêtements réfléchissants, les revêtements structurants, les revêtements présentant une bonne aptitude au nettoyage et les revêtements diffusants.

11. Procédé de fabrication d'un textile selon l'une quelconque des revendications 1 à 10 comprenant un support textile et un revêtement ignifugeant, le procédé comprenant :
- le dépôt d'une composition aqueuse ignifugeante comprenant :
(i) des nanoparticules d'un agent ignifuge minéral choisi dans le groupe constitué de monohydroxyde d'aluminium (AlOOH), de trihydroxyde d'aluminium (Al(OH)₃) et d'un mélange de ceux-ci et
(ii) du poly(alcool vinylique),
- le séchage pour obtenir le revêtement ignifugeant.

12. Procédé de fabrication d'un textile selon la revendication 11 **caractérisé en ce que** la composition aqueuse comprend en masse par rapport à la masse totale de matière solide dans la composition :
(i) 50 à 90 % de nanoparticules de monohydroxyde d'aluminium et/ou de trihydroxyde d'aluminium,
(ii) 10 à 50 %de poly(alcool vinylique).

13. Procédé de fabrication d'un textile selon la revendication 11 ou 12 **caractérisé en ce que** la composition aqueuse ignifugeante a une viscosité inférieure à 10 Pa.s, de préférence inférieure à 5 Pa.s, en particulier inférieure à 3 Pa.s, viscosité correspondant à la viscosité Brookfield.

14. Procédé de fabrication d'un textile selon l'une quelconque des revendications 11 à 13 **caractérisé par le fait que** la composition aqueuse ignifugeante a un pH compris entre 2 et 6, de préférence entre 3 et 5.

15. Procédé de fabrication d'un textile selon l'une quelconque des revendications 11 à 14 **caractérisé par le fait que** la composition aqueuse ignifugeante contient en masse par rapport à la masse totale de la composition aqueuse ignifugeante :
- de 5 %à 40 %, de préférence de 8 %à 15 %de nanoparticules de monohydroxyde d'aluminium et/ou de trihydroxyde d'aluminium,
- de 2 %à 15 %, de préférence 5 %à 10 %de poly(alcool vinylique).

## Patentansprüche

1. Textilie, umfassend einen gewebten oder nicht gewebten textilen Träger und eine flammhemmende Beschichtung, **dadurch gekennzeichnet, dass** die flammhemmende Beschichtung umfasst:
(i) Nanopartikel eines mineralischen flammhemmenden Mittels, die einen Äquivalentdurchmesser von weniger als 950 nm haben und aus der Gruppe ausgewählt sind, die aus Aluminiummonohydroxid (AIOOH), Aluminiumtrihydroxid (Al(OH)₃) und einer Mischung davon und
(ii) Poly(vinylalkohol) besteht.

2. Textilie nach Anspruch 1, **dadurch gekennzeichnet, dass** die flammhemmende Beschichtung an Masse von der Gesamtmasse von (i) und (ii), Folgendes umfasst:
(i) 50 bis 90 % Nanopartikel aus Aluminiummonohydroxid und/oder Aluminiumtrihydroxid,
(ii) 10 bis 50 % Poly(vinylalkohol).

3. Textilie nach Anspruch 1 oder 2, **dadurch gekennzeichnet, dass** die flammhemmende Beschichtung ein Flächengewicht zwischen 25 und 500 g/m² aufweist.

4. Textilie nach einem der vorhergehenden Ansprüche, **dadurch gekennzeichnet, dass** mindestens 95 % der Nanopartikel des mineralischen flammhemmenden Mittels einen Äquivalentdurchmesser von mehr als 20 nm und weniger als 750 nm aufweisen.

5. Textilie nach einem der vorhergehenden Ansprüche, **dadurch gekennzeichnet, dass** der textile Träger Glasfasern umfasst, die mindestens 30 Gew.-% des textilen Trägers ausmachen.

6. Textilie nach einem der vorhergehenden Ansprüche, **dadurch gekennzeichnet, dass** die Textilie ein Leuchtgewebe ist, wobei das Gewebe zwei Seiten umfasst, von denen mindestens eine als beleuchtende Fläche verwendet wird.

7. Textilie nach Anspruch 6, **dadurch gekennzeichnet, dass** die Textilie einen gewebten textilen Träger umfasst, der Kettfäden und Schussfäden umfasst, die unter Bindefäden und optischen Fasern ausgewählt sind, die geeignet sind, seitlich Licht zu emittieren.

8. Textilie nach Anspruch 6 oder 7, **dadurch gekennzeichnet, dass** die Bindefäden Glasfasern umfassen, die mindestens 50 Gew.-% der Gesamtmasse der Bindefäden ausmachen, die den gewebten textilen Träger bilden.

9. Textilie nach einem der Ansprüche 6 bis 9, **dadurch gekennzeichnet, dass** die flammhemmende Beschichtung auf die als beleuchtende Ffläche verwendete Seite aufgebracht ist.

10. Textilie nach einem der vorhergehenden Ansprüche, **dadurch gekennzeichnet, dass** sie mindestens eine zusätzliche Beschichtung umfasst, die unter reflektierenden Beschichtungen, strukturierenden Beschichtungen, Beschichtungen mit gutem Reinigungsvermögen und streuenden Beschichtungen ausgewählt ist.

11. Verfahren zur Herstellung einer Textilie nach einem der Ansprüche 1 bis 10, umfassend einen textilen Träger und eine flammhemmende Beschichtung, wobei das Verfahren umfasst:
- Abscheiden einer flammhemmenden wässrigen Zusammensetzung, umfassend:
(i) Nanopartikel eines mineralischen flammhemmenden Mittels, das aus der Gruppe ausgewählt ist, die aus Aluminiummonohydroxid (AIOOH), Aluminiumtrihydroxid (Al(OH)₃) und einer Mischung davon besteht, und
(ii) Poly(vinylalkohol),
- Trocknen, um die flammhemmende Beschichtung zu erhalten.

12. Verfahren zur Herstellung einer Textilie nach Anspruch 11, **dadurch gekennzeichnet, dass** die wässrige Zusammensetzung an Masse, bezogen auf die Gesamtmasse an Feststoff in der Zusammensetzung, Folgendes umfasst:
(i) 50 bis 90 % Nanopartikel aus Aluminiummonohydroxid und/oder Aluminiumtrihydroxid,
(ii) 10 bis 50 % Poly(vinylalkohol).

13. Verfahren zur Herstellung einer Textilie nach Anspruch 11 oder 12, **dadurch gekennzeichnet, dass** die flammhemmende wässrige Zusammensetzung eine Viskosität von weniger als 10 Pa·s, bevorzugt weniger als 5 Pa·s, insbesondere weniger als 3 Pa·s aufweist, wobei die Viskosität der Brookfield-Viskosität entspricht.

14. Verfahren zur Herstellung einer Textilie nach einem der Ansprüche 11 bis 13, **dadurch gekennzeichnet, dass** die flammhemmende wässrige Zusammensetzung einen pH-Wert zwischen 2 und 6, bevorzugt zwischen 3 und 5 aufweist.

15. Verfahren zur Herstellung einer Textilie nach einem der Ansprüche 11 bis 14, **dadurch gekennzeichnet, dass** die flammhemmende wässrige Zusammensetzung an Masse, bezogen auf die Gesamtmasse der flammhemmenden wässrigen Zusammensetzung, Folgendes enthält:
- 5 % bis 40 %, bevorzugt 8 % bis 15 % Nanopartikel aus Aluminiummonohydroxid und/oder Aluminiumtrihydroxid,
- 2 % bis 15 %, bevorzugt 5 % bis 10 % Poly(vinylalkohol).

## Claims

1. A textile comprising a woven or nonwoven textile backing and a flame retardant coating, **characterized in that** the flame retardant coating comprises:
(i) nanoparticles of a mineral flame retardant which have an equivalent diameter of less than 950 nm and which are selected from the group consisting of aluminum monohydroxide (AlOOH), aluminum trihydroxide (Al(OH)₃) and a mixture thereof and
(ii) poly(vinyl alcohol).

2. The textile as claimed in claim 1, **characterized in that** the flame retardant coating comprises, by weight of the total weight of (i) and (ii):
(i) 50% to 90% of aluminum monohydroxide and/or aluminum trihydroxide nanoparticles,
(ii) 10% to 50% of poly(vinyl alcohol).

3. The textile as claimed in claim 1 or 2, **characterized in that** the flame retardant coating has a grammage of between 25 and 500 g/m².

4. The textile as claimed in any one of the preceding claims, **characterized in that** at least 95% of the mineral flame retardant nanoparticles have an equivalent diameter of greater than 20 nm and less than 750 nm.

5. The textile as claimed in any one of the preceding claims, **characterized in that** the textile backing comprises glass yarns representing at least 30% by weight of the textile backing.

6. The textile as claimed in any one of the preceding claims, **characterized in that** the textile is a luminous fabric, the fabric comprising two faces, at least one of which is used as a lighting surface.

7. The textile as claimed in claim 6, **characterized in that** the textile comprises a woven textile backing comprising warp yarns and weft yarns selected from binding yarns and optical fibers capable of emitting light sideways.

8. The textile as claimed in claim 6 or 7, **characterized in that** the binding yarns comprise glass yarns representing at least 50% by weight of the total weight of the binding yarns forming the woven textile backing.

9. The textile as claimed in any one of claims 6 to 9, **characterized in that** the flame retardant coating is applied on the side of the face used as a lighting surface.

10. The textile as claimed in any one of the preceding claims, **characterized in that** it comprises at least one additional coating selected from reflective coatings, structuring coatings, coatings having a good cleanability and diffusing coatings.

11. A process for manufacturing a textile as claimed in any one of claims 1 to 10, comprising a textile backing and a flame retardant coating, the process comprising:
- deposition of an aqueous flame retardant composition comprising:
(i) nanoparticles of a mineral flame retardant selected from the group consisting of aluminum monohydroxide (AlOOH), aluminum trihydroxide (Al(OH)₃) and a mixture thereof and
(ii) poly(vinyl alcohol),
- drying in order to obtain the flame retardant coating.

12. The process for manufacturing a textile as claimed in claim 11, **characterized in that** the aqueous composition comprises, by weight relative to the total weight of solid material in the composition:
(i) 50% to 90% of aluminum monohydroxide and/or aluminum trihydroxide nanoparticles,
(ii) 10% to 50% of poly(vinyl alcohol).

13. The process for manufacturing a textile as claimed in claim 11 or 12, **characterized in that** the aqueous flame retardant composition has a viscosity of less than 10 Pa.s, preferably less than 5 Pa.s, in particular less than 3 Pa.s, which viscosity corresponds to the Brookfield viscosity.

14. The process for manufacturing a textile as claimed in any one of claims 11 to 13, **characterized in that** the aqueous flame retardant composition has a pH of between 2 and 6, preferably between 3 and 5.

15. The process for manufacturing a textile as claimed in any one of claims 11 to 14, **characterized in that** the aqueous flame retardant composition contains, by weight relative to the total weight of the aqueous flame retardant composition:
- from 5% to 40%, preferably from 8% to 15% of aluminum monohydroxide and/or aluminum trihydroxide nanoparticles,
- from 2% to 15%, preferably from 5% to 10% of poly(vinyl alcohol).
